# FASCICULE DE BREVET EUROPEEN

(11) **EP 1 437 613 B1**
(45) Date de publication et mention de la délivrance du brevet: **21.09.2005**
(21) Numéro de dépôt: 03293177.6
(22) Date de dépôt: 16.12.2003
(51) Int. Cl.: G02B 6/16, C03C 25/10

(54) **Fibre optique à réseau de Bragg inscrit directement à travers un revêtement recouvrant la gaine**
Optische Faser mit Bragg-Gitter direkt eingeschrieben durch eine den Mantel bedeckende Schicht
Optical fiber with a Bragg grating directly written through a cladding coating

(30) Priorité: 03.01.2003 FR 0300026
(43) Date de publication de la demande: 14.07.2004
(73) Titulaire: ALCATEL, 75008 Paris (FR)
(72) Inventeur: Andre, Sébastien, 34570 Pignan (FR); Andrieu, Xavier, 91200 Bretigny sur Orge (FR); Make, Dalila, 91180 St Germain Les Arpajon (FR); Poussière, Fabrice, 91300 Massy (FR); Masson, Fréderic, 68850 Staffelfeden (FR)
(74) Mandataire: Lamoureux, Bernard

(56) Documents cités:
- EP-A- 0 990 625
- US-A- 5 773 486
- US-A- 5 989 627
- US-B1- 6 396 983
- IMAMURA K ET AL: "High reliability tin-codoped germanosilicate fibre Bragg gratings fabricated by direct writing method" ELECTRONICS LETTERS, IEE STEVENAGE, GB, vol. 34, no. 18, 3 septembre 1998 (1998-09-03), pages 1772-1773, XP006010237 ISSN: 0013-5194

## Description

La présente invention se rapporte à une fibre optique à au moins un réseau de Bragg obtenue par inscription directe à travers le revêtement recouvrant la gaine ainsi qu'à un procédé de fabrication d'une fibre optique à au moins un réseau de Bragg.

De manière connue, les fibres optiques à réseau de Bragg comportent un coeur en silice dopé au germanium recouvert successivement d'une gaine en silice et d'un revêtement en un matériau choisi pour être transparent et thermorésistant au rayonnement d'inscription du réseau généralement émis par un laser et de type ultraviolet (UV). De cette manière, l'inscription du réseau de Bragg est réalisée dans le coeur et/ou la gaine directement à travers ce revêtement.

Le document intitulé "Grating writing though fiber coating at 244 nm and 248 nm" Chao et al, Electronics Letters, 27^{th} May, 1999 Vol 35, n°11, pp924-925 divulgue ainsi une fibre à un réseau de Bragg obtenue par une inscription directe du réseau dans le coeur de la fibre à travers son revêtement.

Le revêtement est en silicone qui présente une transmittance égale à 90% environ notamment à deux rayonnements UV d'inscription classiques: 244 nm et 248 nm. La résistance thermique de ce silicone est en outre validée par un passage dans un four à 300°C pendant 3 minutes.

Le plus petit réseau de Bragg décrit est long de 1 cm et présente un faible contraste - c'est à dire une variation d'indice de réfraction - de 2 10⁻⁴, correspondant à une réflectivité de 92%.

Par ailleurs, l'inscription est réalisée selon une technique de balayage du faisceau laser qui nécessite un appareillage complexe.

Les propriétés mécaniques de ce silicone ne sont pas satisfaisantes, notamment en terme de longévité, la fibre pouvant par exemple se détériorer pendant son stockage. En outre, ce silicone n'est pas suffisamment résistant à l'eau ce qui est critique dans des liaisons sous-marines.

Ce silicone est le produit RTV615 de la société General Electric obtenu à partir d'une composition bicomposant durcissable à température ambiante, de six à sept jours à 25°C, et comportant de façon connue deux précurseurs du silicone, à mélanger juste avant l'application sur la gaine de la fibre. Le temps de vie de ce mélange est de quatre heures.

Cette composition, faiblement visqueuse, s'avère difficile à mettre en forme. Dès la mise en contact des deux précurseurs, la viscosité du mélange évolue très vite ce qui implique que l'épaisseur du revêtement, en moyenne égale à 60 µm, n'est pas constante sur toute la longueur de la fibre. De plus, cette fibre ne peut être bobinée sur elle-même rapidement car le temps de durcissement est de l'ordre de plusieurs jours. Le contact de deux parties de la fibre lors du séchage provoque le collage du revêtement de celles-ci entre elles.

Un autre exemple de revêtement est donné dans le document US-A-5 773 486, qui décrit un polymère transparent aux UV et adapté à l'inscription directe d'un réseau de Bragg.

L'invention a pour objet de pallier les problèmes précités en fournissant une fibre optique à au moins un réseau de Bragg obtenue par inscription directe à travers le revêtement recouvrant la gaine optimisé en termes de résistance thermique et photochimique et de transparence au rayonnement d'inscription de type UV. Cette fibre doit avoir des bonnes propriétés mécaniques, une longévité améliorée, et le ou les réseaux de Bragg présenter des propriétés optiques ajustées en fonctions des applications recherchées.

L'invention propose à cet effet une fibre optique à au moins un réseau de Bragg comportant un coeur entouré successivement d'une gaine et d'un revêtement, ladite fibre étant obtenue par inscription directe dudit réseau dans le coeur et/ou la gaine à travers le revêtement en un matériau contenant une substance organique sensiblement transparente à un rayonnement d'inscription dudit réseau de type ultraviolet, caractérisée en ce que le matériau dudit revêtement contient une substance inorganique non miscible avec la substance organique et répartie de manière sensiblement homogène dans ledit matériau.

Le matériau selon l'invention est un matériau homogène au sens où il présente sensiblement les mêmes propriétés en tout point du matériau et isotrope au sens où il présente les mêmes propriétés dans toutes les dimensions de l'espace.

La présence à la fois de la substance inorganique et de la substance organique ne provoque pas de réactions chimiques ou physiques indésirables amenant à une diminution des performances physiques ni même d'évolution de la structure dans le temps. Bien au contraire, le matériau selon l'invention présente les propriétés cumulées de chacune des deux substances.

La substance organique est choisie pour conférer au matériau du revêtement sa transparence aux rayonnements ultraviolets. La substance organique peut contenir une ou plusieurs des liaisons chimiques suivantes : C-C, C-Si, C-I, C-H, C-O, O-H, Si-O, Si-H, C-F, C-CI, Ge-C, Ge-Si ces dernières n'ayant pas d'absorbance significative dans l'ultraviolet de longueur d'onde supérieure ou égale à 240 nm.

Et cette substance organique peut être exempt de noyaux aromatiques, d'insaturations conjuguées, ces éléments absorbant fortement un rayonnement ultraviolet.

Par exemple, les additifs contiennent généralement de tels groupements et sont à éviter du fait de leur opacité.

De même, les catalyseurs à base de métal et notamment de platine tels que le Pt(AcAc)₂, PtCpMe₃ utilisés pour obtenir un polymère par hydrosylilation sont à éviter d'autant que la présence de métaux réduit la longévité de la fibre.

La substance inorganique est choisie pour conférer au matériau du revêtement selon l'invention des propriétés mécaniques améliorées (stockabilité, résistance à la fatigue, à la traction, à l'impact) une amélioration de l'adhérence sur la gaine, une étanchéité à l'eau et aux solvants organiques renforcée et un meilleur contrôle de la viscosité pour faciliter la formation du revêtement et mieux contrôler son épaisseur sur toute la longueur de la fibre.

En outre, cette substance inorganique n'altère pas la transparence mais augmente les résistances thermiques et photochimiques du revêtement. Cela évite ainsi toute dégradation de la fibre induite par le rayonnement d'inscription même à des fluences élevées, par exemple supérieures à 1000 J.cm-².

En outre, l'état de surface du matériau du revêtement en particulier sa rugosité est mieux contrôlable et va améliorer le profil de transmittance du revêtement, ce qui peut permettre notamment de réduire la durée d'inscription.

Un large panel de propriétés peut être obtenu en changeant la nature, la composition, la proportion de la substance inorganique.

De manière avantageuse, la substance inorganique peut être choisie parmi une charge minérale, un agent de renfort et contient de préférence des particules de granulométrie moyenne inférieure à un vingtième de la longueur d'onde dudit rayonnement d'inscription, par exemple entre 190 nm et 400 nm, et notamment aux valeurs standards 244 nm, 248 nm, 266 nm, 302 nm, 355 nm ou aux longueurs d'onde des lasers UV disponibles sur le marché.

Cette limitation de la granulométrie moyenne permet d'éviter toute diffraction et autre phénomène de distorsion du rayonnement d'inscription et donc d'obtenir un réseau de Bragg ad hoc.

Selon une caractéristique, la substance inorganique contient de la silice qui de préférence est pyrogénée.

Le choix de la silice est particulièrement adapté lorsque la substance organique contient principalement du silicone.

Le matériau du revêtement peut comprendre toutes proportions permettant d'améliorer les propriétés physiques du revêtement.

Selon une caractéristique préférée, le matériau du revêtement peut comprendre jusqu'à 30 % en masse de la substance inorganique et lorsque la substance organique contient du silicone, le matériau comprend entre 1,2 et 5 % en masse de la substance inorganique et de préférence environ 2,75 % en masse.

Le réseau de Bragg peut présenter un contraste de 7,4 10⁻⁴ pour un longueur de réseau de 1 mm et un contraste de 2,3 10⁻⁴ pour un longueur de réseau de 5 mm. Ces réseaux sont utilisables pour des réseaux égalisateurs de gain, des réseaux réflecteurs pour des fonctions de routage, pour des résonateurs laser ou des compensateurs de dispersion chromatique.

L'invention s'applique naturellement à un dispositif optique incorporant un élément en un matériau tel que défini précédemment.

L'invention convient naturellement pour la fabrication de dispositifs contenant une fibre telle que définie précédemment. On peut citer par exemple de filtres optiques, de démultiplexeurs, de compensateurs de dispersion, et notamment les filtres égalisateurs de gain et tout particulièrement les filtres égalisateurs de pente (PTEQ pour Passive Tilt EQualize en anglais).

Ce matériau peut aussi être utilisé pour tout autre élément qu'une fibre du moment qu'une transparence aux UV et/ou une résistance thermique et/ou chimique lui est utile. Par exemple, cet élément peut être une colle, un masque de phase ou un composant optique.

L'invention propose également un procédé de fabrication de la fibre à au moins un réseau de Bragg telle que définie précédemment, procédé comportant une étape de formation dudit revêtement sur la gaine et une étape d'inscription dudit réseau à travers ledit revêtement dans le coeur et/ou la gaine à l'aide d'une source du rayonnement d'inscription. L'étape de formation du revêtement comprend:
- la préparation d'un mélange durcissable contenant ladite substance inorganique et une substance organique liquide contenant au moins un précurseur de polymère durcissable,
- l'application du mélange durcissable sur ladite gaine en monocouche,
- le durcissement du mélange durcissable de façon à former ledit matériau.

L'ajout de la substance inorganique rend le mélange davantage visqueux donc applicable.

En choisissant un précurseur de polymère thermodurcissable, il suffit simplement d'intégrer à la tour de fibrage un ou plusieurs fours pour obtenir le matériau .

En choisissant un précurseur de polymère photodurcissable, il suffit simplement d'intégrer à la tour de fibrage une ou plusieurs source UV pour obtenir le matériau.

L'étape d'inscription dudit réseau peut être de préférence réalisée en statique et non par balayages comme dans l'art antérieur.

De préférence, le précurseur de polymère est choisi parmi un précurseur de silicone thermodurcissable et un précurseur de silicone photodurcissable.

Les particularités et avantages de l'invention apparaîtront clairement à la lecture de la description qui suit, faite à titre d'exemple illustratif et non limitatif et faite en référence aux figures annexées dans lesquelles :
- la figure 1 montre le profil de transmittance T (exprimée en %) en fonction de la longueur d'onde (exprimée en nm) d'un substrat en silice revêtu d'un matériau d'épaisseur 60µm selon l'invention,
- la figure 2 représente la fibre optique obtenue après formation d'un revêtement d'une gaine d'une fibre optique à photoinscrire conforme à l'invention,
- la figure 3, représente une fibre à réseau de Bragg dans le mode de réalisation préféré de l'invention.

L'invention réside dans le choix d'un matériau contenant une substance organique et une substance inorganique non miscible avec la substance organique et répartie de manière sensiblement homogène dans le matériau, substances sélectionnées pour former un revêtement d'une fibre optique à un ou plusieurs réseaux de Bragg c'est-à-dire permettant d'obtenir rapidement le revêtement, autorisant l'inscription directe de réseau(x) de Bragg, conférant à la fibre de bonnes propriétés mécaniques.

L'étape de formation de ce revêtement comprend d'abord la préparation d'un mélange durcissable contenant :
- une substance inorganique, jusqu'à 30 % en masse, qui contient de préférence des particules de granulométrie moyenne inférieure à un vingtième de la longueur d'onde du rayonnement d'inscription, choisie par exemple égale à 248 nm,
- une substance organique liquide contenant au moins un précurseur de polymère durcissable choisi de préférence parmi les précurseurs de polymère thermodurcissables, les précurseurs de polymère photodurcissables

De préférence, la substance inorganique est de la silice pyrogénée et le précurseur de polymère est un précurseur de silicone thermoréticulable par exemple le produit bicomposant LSR1551 de la société Dow Corning.

Dans cette configuration, le mélange contient entre 1,2 et 5 % en masse de la silice pyrogénée et de préférence environ 2,75 % en masse.

Ce mélange durcissable de viscosité contrôlée et égale à 6000 mPa.s à 25°C est ensuite appliqué en une monocouche d'épaisseur égale à 60µm à l'aide d'une tour d'enduction sur une gaine de fibre.

Un passage dans des fours à 100°C suivi d'un recuit à 150°C conduit à la formation dudit matériau. En sortie, le revêtement a un aspect transparent et non collant.

Le matériau obtenu est exempt de noyaux aromatiques, d'insaturations conjuguées et est transparent et résistant au rayonnement de type ultraviolet d'inscription d'un réseau de Bragg.

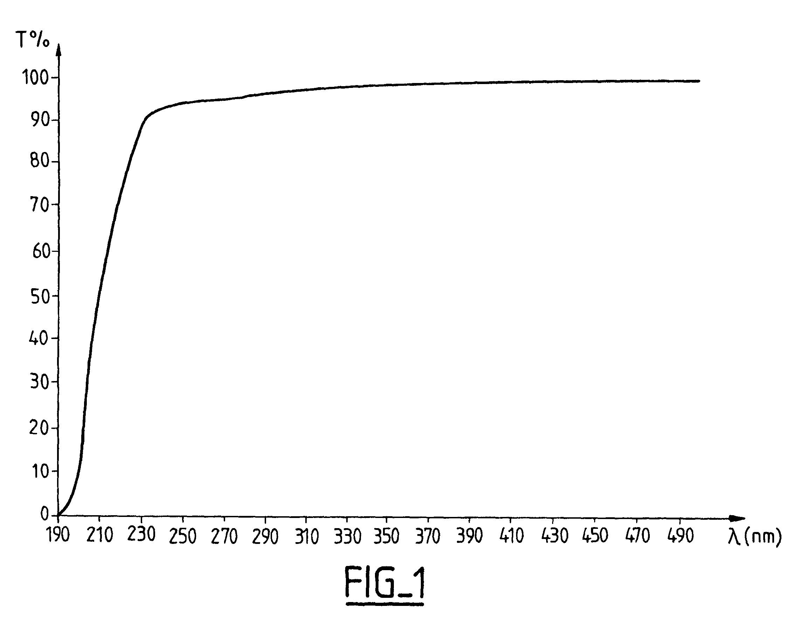

La figure 1 montre le profil de transmittance T (exprimée en %) en fonction de la longueur d'onde (exprimée en nm) d'un substrat en silice revêtu de 60µm du matériau qui vient d'être décrit.

On voit sur cette figure 1 que la transmittance T dépasse 90% entre 215 à 500 nm soit sur une large gamme de longueur d'onde.

60 µm est l'épaisseur actuelle standard de revêtement de fibre à au moins un réseau de Bragg.

Pour d'autres épaisseurs de couches, les transmittances sont, à 248 nm, les suivantes:
- pour 20 µm : 99%,
- pour 30 µm : 98%,
- pour 124 µm : 91,5%,
- pour 240 µm : 87%.

Dans une variante, on peut choisir un précurseur de silicone photoréticulable, par un rayonnement de longueur d'onde distincte ou non de celle d'inscription dans la mesure où le silicone devient transparent après sa réticulation, et par exemple choisi dans la liste des produits suivants:
- Ebecryl 350, Ebecryl 1360 de la société UCB,
- UVS-500 de la société Croda,
- Additive 97-168, additive 97-169, additive 99-622 Rahn- de la société Genomer,
- Rad 2100, Rad 2200, Rad 2500, rad 2600, Rad 2700 (Tego chemie) DMS-U22 de la société Gelest,
- les produits de la gamme silcolease UV de la société Rhodia,
- DMS-R01, DMS-R05, DMS-R18, DMS-R22, DMS-R31 (Gelest)
- le Poly[dimethylsiloxane-co-[2-(3,4-epoxycyclohexyl) ethyl] methylsiloxane] de la société Aldrich.

Il est important de choisir un photoamorceur (si nécessaire) non absorbant dans les longueurs d'inscription après passage dans un four ultraviolet ad hoc.

La substance organique peut aussi être un polymère autre qu'un silicone du moment que ce dernier est transparent aux UV.

Parmi les polymères exempts de noyaux aromatiques, d'insaturations conjuguées, on peut citer:
- un polyacrylate tels que les produits Repolem 1137, Repolem PHE05 de la société ATOFINA,
- un polymère thermoplastique choisi parmi les polyfluorures de vinylidène (PVDF) et les copolymères PVDF et d'hexafluoropropène (HFP) tels que les produits Kynar de la société ATOFINA,
- les polyéthylènes glycol acrylate, les polyuréthanes aliphatiques acrylates.

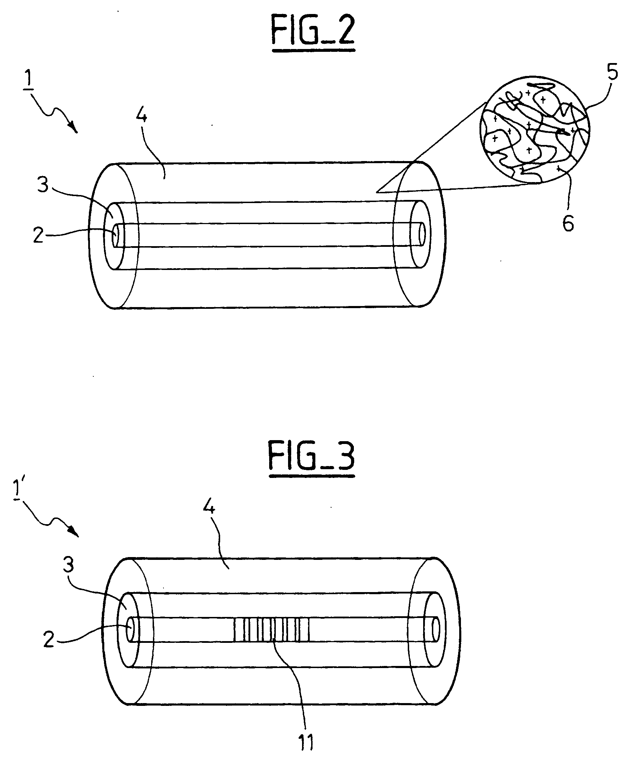

La fibre selon l'invention obtenue après la formation du revêtement est présentée en vue longitudinale en figure 2 où l'on voit cette fibre optique 1 qui comporte un coeur 2 en silice dopé au germanium, recouvert successivement d'une gaine 3 en silice et du revêtement en le matériau 4.

Cette fibre peut être lovée sur une bobine pour hydrogénation sans se rompre pas et peut être stockée plusieurs mois sur cette bobine.

Le silicone 5 (voir la zone agrandie en figure 2) forme la matrice du revêtement, et la silice pyrogénée 6, correspond à un élément de renfort.

L'inscription d'inscription du réseau de Bragg de la fibre 1 est réalisée en statique. Le rayonnement d'inscription issu par exemple d'une source laser UV est de longueur d'onde par exemple choisie à 248 nm.

Les conditions d'inscription sont les suivantes :
- densité d'énergie moyenne : 70 mJ/cm,
- durée d'inscription : 12 minutes,
- fréquence : 20 Hz,
- soit une fluence totale de : 1010 J/cm².

Les caractéristiques du réseau de Bragg sont les suivantes :
- longueur d'inscription : 1 mm,
- contraste : 7,4 10⁻⁴,
- profondeur : 6 dB à 1571.nm.

Le contraste atteint est très élevé sans dégradation du revêtement même à une fluence choisie très élevée : le matériau présente ainsi des résistances photochimiques et thermiques très élevées.

Dans une variante, par exemple pour une utilisation de la fibre à réseau de Bragg dans des réseaux égalisateurs de gain, des réseaux réflecteurs pour des fonctions de routage, pour des résonateurs laser ou des compensateurs de dispersion chromatique les conditions d'inscription sont les suivantes :
- densité d'énergie moyenne : 45,5 mJ/cm,
- durée d'inscription : 29 minutes,
- soit une fluence totale de 1580 J/cm²,
- fréquence : 20Hz.

Les caractéristiques du réseau de Bragg sont alors les suivantes :
- longueur d'inscription : 5 mm,
- contraste : 2,3 10⁻⁴,
- profondeur : 11,8 dB à 1559 nm.

La figure 3 est une vue longitudinale d'une fibre 1' à réseau de Bragg 11 dans un mode de réalisation préféré de l'invention.

Cette fibre 1' ainsi obtenue est par exemple destinée à être incorporée dans un dispositif optique (non représenté) par exemple de type filtre ou répéteur de signaux dans les transmissions optiques longues distances.

Dans une variante, afin d'augmenter l'indice de réfraction du revêtement au delà de 1,45 (qui correspond à l'indice de la silice dopée germanium), des additifs d'indice de réfraction adéquat sont ajoutés dans le mélange durcissable en vue de fabriquer une fibre à réseau de Bragg oblique (Slanted Bragg Grating en anglais) efficace.

Bien entendu, l'invention n'est pas limitée au mode de réalisation qui vient d'être décrit.

La fibre peut comporter plusieurs réseaux de Bragg, la longueur du ou des réseaux de Bragg est à adapter en fonction des applications recherchées. Les conditions de photoinscription peuvent être modifiées par exemple en vue d'augmenter le contraste et/ou la profondeur.

Enfin, on pourra remplacer tout moyen par un moyen équivalent sans sortir du cadre de l'invention.

## Revendications

1. Fibre optique (1') à au moins un réseau de Bragg (11) comportant un coeur (2) entouré successivement d'une gaine (3) et d'un revêtement (4), ladite fibre étant obtenue par inscription directe dudit réseau dans le coeur et/ou la gaine à travers le revêtement en un matériau contenant une substance organique (5) transparente à un rayonnement d'inscription dudit réseau de type ultraviolet, **caractérisée en ce que** le matériau dudit revêtement contient une substance inorganique (6) non miscible avec la substance organique et répartie de manière sensiblement homogène dans ledit matériau.

2. Fibre optique (1') à au moins un réseau de Bragg (11) selon la revendication 1, dans laquelle la substance inorganique (6) est choisie parmi une charge minérale, un agent de renfort et de préférence contient des particules de granulométrie moyenne inférieure à un vingtième de la longueur d'onde dudit rayonnement d'inscription.

3. Fibre optique (1') à au moins un réseau de Bragg (11) selon l'une des revendication 1 ou 2, dans laquelle la substance inorganique (6) est de la silice de préférence pyrogénée.

4. Fibre optique (1') à au moins un réseau de Bragg (11) selon l'une des revendications 1 à 3, dans laquelle ledit matériau comporte jusqu'à 30 % en masse de la substance inorganique (6) et, lorsque la substance organique (5) contient du silicone, le matériau comprend entre 1,2% et 5 % en masse de la substance inorganique et de préférence environ 2,75 % en masse.

5. Fibre optique (1') à au moins un réseau de Bragg (11) selon l'une des revendications 1 à 4, dans laquelle le réseau de Bragg (11) présente un contraste de 7,4 10⁻⁴ pour un longueur de réseau de 1 mm et un contraste de 2,3 10⁻⁴ pour un longueur de réseau de 5 mm.

6. Dispositif optique incorporant une fibre (1') à réseau de Bragg (11) telle que définie selon l'une des revendications 1 à 5.

7. Procédé de fabrication d'une fibre optique (1') à au moins un réseau de Bragg (11) définie selon l'une des revendications 1 à 5, procédé comportant une étape de formation dudit revêtement sur la gaine et une étape d'inscription dudit réseau à travers ledit revêtement dans le coeur et/ou la gaine à l'aide d'une source du rayonnement d'inscription, dans lequel l'étape de formation du revêtement comprend :
- la préparation d'un mélange durcissable contenant ladite substance inorganique et une substance organique liquide contenant au moins un précurseur de polymère durcissable,
- l'application du mélange durcissable sur ladite gaine en monocouche,
- le durcissement du mélange durcissable de façon à former ledit matériau.

8. Procédé de fabrication d'une fibre optique (1') à au moins un réseau de Bragg (11) selon la revendication 7, dans lequel l'étape d'inscription dudit réseau de Bragg est réalisée en statique.

9. Procédé de fabrication d'une fibre optique (1') à au moins un réseau de Bragg (11) selon l'une des revendications 7 ou 8, dans lequel le précurseur de polymère est choisi parmi un précurseur de silicone thermodurcissable et un précurseur de silicone photodurcissable.

## Patentansprüche

1. Optische Faser (1') mit mindestens einem Bragg-Gitter (11), bestehend aus einem Kern (2), der zunächst mit einem Mantel (3) und anschließend mit einer Schicht (4) umhüllt wird, wobei die genannte Faser durch direktes Einschreiben des genannten Gitters in den Kern und/oder den Mantel durch die Schicht aus einem Material hergestellt wird, das eine organische Substanz (5) enthält, die für die ultraviolette Strahlung zum Einschreiben des genannten Gitters transparent ist, **dadurch gekennzeichnet, dass** das Material der genannten Schicht eine anorganische Substanz (6) enthält, die mit der organischen Substanz nicht mischbar ist und die auf praktisch homogene Weise in dem genannten Material verteilt ist.

2. Optische Faser (1') mit mindestens einem Bragg-Gitter (11) gemäß Anspruch 1, wobei die anorganische Substanz (6) zwischen einem mineralischen Füllstoff und einem Verstärkungsmittel ausgewählt wird und vorzugsweise Partikel mit einer durchschnittlichen Korngröße unter einem Zwanzigstel der Wellenlänge der genannten Strahlung zum Einschreiben enthält.

3. Optische Faser (1') mit mindestens einem Bragg-Gitter (11) gemäß einem der Ansprüche 1 oder 2, wobei es sich bei der anorganischen Substanz (6) um vorzugsweise pyrogenes Siliziumoxid handelt.

4. Optische Faser (1') mit mindestens einem Bragg-Gitter (11) gemäß einem der Ansprüche 1 bis 3, wobei das genannte Material bis zu 30 Gewichtsprozent der anorganischen Substanz (6) enthält, und das Material, wenn die organische Substanz (5) Silikon enthält, zwischen 1,2 und 5 Gewichtsprozent der anorganischen Substanz und vorzugsweise 2,75 Gewichtsprozent enthält.

5. Optische Faser (1') mit mindestens einem Bragg-Gitter (11) gemäß einem der Ansprüche 1 bis 4, in der das Bragg-Gitter (11) einen Kontrast von 7,4 10⁻⁴ für eine Gitterlänge von 1 mm und einen Kontrast von 2,3 10⁻⁴ für eine Gitterlänge von 5 mm aufweist.

6. Optische Vorrichtung, die eine Faser (1') mit einem Bragg-Gitter (11) entsprechend der Definition gemäß einem der Ansprüche 1 bis 5 enthält.

7. Herstellungsverfahren für eine optische Faser (1') mit mindestens einem Bragg-Gitter (11) entsprechend der Definition gemäß einem der Ansprüche 1 bis 5, wobei das Verfahren einen Schritt zur Bildung der genannten Schicht auf dem Mantel sowie einen Schritt zum Einschreiben des genannten Gitters durch die Schicht in den Kern und/oder den Mantel mit Hilfe einer Strahlungsquelle zum Einschreiben umfasst, wobei der Schritt zur Bildung der Schicht beinhaltet:
- Herstellung einer aushärtbaren Mischung, die aus der genannten anorganischen Substanz und einer flüssigen, organischen Substanz besteht, und die mindestens einen aushärtbaren Polymerzwischenstoff umfasst,
- Auftragen der aushärtbaren Mischung auf den genannten Mantel in einer einlagigen Schicht,
- Aushärten der aushärtbaren Mischung, so dass sich das genannte Material bildet.

8. Herstellungsverfahren für eine optische Faser (1') mit mindestens einem Bragg-Gitter (11) gemäß Anspruch 7, wobei der genannte Schritt zum Einschreiben des genannten Bragg-Gitters statisch ausgeführt wird.

9. Herstellungsverfahren für eine optische Faser (1') mit mindestens einem Bragg-Gitter (11) gemäß Anspruch 7 oder 8, in dem der Polymerzwischenstoff zwischen einem warmaushärtenden Silikonzwischenstoff und einem fotoaushärtenden Silikonzwischenstoff gewählt wird.

## Claims

1. An optical fiber (1') having at least one Bragg grating (11), the fiber comprising a core (2) surrounded in succession by cladding (3) and a coating (4), said fiber being obtained by writing said grating directly in the core and/or the cladding through the coating which is made of a material containing an organic substance (5) that is transparent to the ultraviolet radiation used for writing said grating, said optical fiber being **characterized in that** the material of said coating contains an inorganic substance (6) that is not miscible with the organic substance and that is distributed in substantially uniform manner in said material.

2. An optical fiber (1') having at least one Bragg grating (11) according to claim 1, in which the inorganic substance (6) is selected from a mineral filler, and a reinforcing agent, and preferably contains particles of mean grain size smaller than one-twentieth the wavelength of said radiation used for writing.

3. An optical fiber (1') having at least one Bragg grating (11) according to claim 1 or claim 2, in which the inorganic substance (6) is silica, preferably pyrogenic silica.

4. An optical fiber (1') having at least one Bragg grating (11) according to any one of claims 1 to 3, in which said material comprises up to 30% by weight of inorganic substance (6), and when the organic substance (5) contains silicone, the material comprises 1.2% to 5% by weight of the inorganic substance and preferably about 2.75%.

5. An optical fiber (1') having at least one Bragg grating (11) according to any one of claims 1 to 4, in which the Bragg grating (11) presents contrast of 7.4×10⁻⁴ for a grating of length 1 mm and contrast of 2.3×10⁻⁴ for a grating of length 5 mm.

6. An optical device incorporating a fiber (1') having a Bragg grating (11) as defined in any one of claims 1 to 5.

7. A method of manufacturing an optical fiber (1') having at least one Bragg grating (11) as defined in any one of claims 1 to 5, said method including a step of forming said coating on the cladding and a step of writing said grating in the core and/or the cladding through said coating by using a source of writing radiation, in which the step of forming the coating comprises:
- preparing a settable mixture containing said inorganic substance and a liquid organic substance containing at least one polymer precursor that is settable;
- applying the settable mixture on said cladding as a single layer; and
- causing the settable mixture to set so as to form said material.

8. A method of manufacturing an optical fiber (1') having at least one Bragg grating (11) according to claim 7, in which the step of writing said Bragg grating is performed statically.

9. A method of manufacturing an optical fiber (1') having at least one Bragg grating (11) according to claim 7 or claim 8, in which the polymer precursor is selected from a silicone precursor that is thermosetting and a silicone precursor that is photosetting.
